# EUROPÄISCHE PATENTANMELDUNG

(11) **EP 4 596 941 A1**
(43) Veröffentlichungstag der Anmeldung: **06.08.2025**
(21) Anmeldenummer: 24193783.8
(22) Anmeldetag: 09.08.2024
(51) Int. Cl.: F16L 19/025

(54) **VERBINDUNGSELEMENT FÜR SCHLÄUCHE, ROHRE ODER ANDERE FLUIDTRANSPORTEINRICHTUNGEN**

(30) Priorität: 30.01.2024 AT 500732024
(71) Anmelder: Gitterle, Andreas, 4713 Gallspach (AT)
(72) Erfinder: Gitterle, Andreas, 4713 Gallspach (AT)
(74) Vertreter: Babeluk Patentanwälte GmbH

(57) **Zusammenfassung**

Die Erfindung betrifft ein Verbindungselement für Schläuche, Rohre oder andere Fluidtransporteinrichtungen, mit zumindest zwei Verbindungsteilen (1, 2), wobei die Verbindungsteile (1, 2) miteinander um Schraubachsen (15) der Verbindungsteile (1, 2) verschraubbar sind, wobei zumindest ein Verbindungsteil (1,2) zumindest eine Aufnahme (11) für eine Dichtung (12) zur Abdichtung der Verbindung zwischen zumindest zwei der Verbindungsteile (1, 2) aufweist, wobei ein erstes Verbindungsteil (1) zumindest eine erste Skala (5) mit einer Vielzahl an Messmarkierungen und ein zweites Verbindungsteil (2) zumindest eine zweite Skala (6) mit zumindest zwei Referenzmarkierungen aufweist, und wobei die erste Skala (5) und die zweite Skala (6) im verschraubten Zustand einander gegenüberstehen und durch Verdrehung der Verschraubung gegeneinander verdrehbar sind.

## Beschreibung

Die Erfindung betrifft ein Verbindungselement für Schläuche, Rohre oder andere Fluidtransporteinrichtungen, mit zumindest zwei Verbindungsteilen, wobei die Verbindungsteile miteinander um Schraubachsen der Verbindungsteile verschraubbar sind, wobei zumindest ein Verbindungsteil zumindest eine Aufnahme für eine Dichtung zur Abdichtung der Verbindung zwischen zumindest zwei der Verbindungsteile aufweist.

Sie betrifft auch ein Verfahren zur Verbindung von Schläuchen, Rohren oder anderen Fluidtransporteinrichtungen mittels eines Verbindungselements aufweisend zumindest zwei Verbindungsteile, wobei die Verbindungsteile jeweils mit zumindest einem Schlauch, Rohr oder anderen Fluidtransporteinrichtung strömungsverbunden werden, wobei in oder an zumindest eine Aufnahme zumindest eines Verbindungsteils zumindest eine Dichtung angeordnet wird und die Verbindungsteile ineinander geschraubt werden.

Sie betrifft auch einen Markierungsbausatz.

Verbindungselemente wie oben beschrieben werden in verschiedenen Bereichen verwendet, insbesondere zum Transport von Fluiden wie Flüssigkeiten oder Gasen, beispielsweise Treibstoff, Lösungsmittel oder andere Chemikalien. Dabei ist wesentlich, dass die Verbindung dicht ist, wofür eine Dichtung in das Verbindungselement eingesetzt wird.

Das Verbindungselement dient dazu, eine Fluidverbindung herzustellen. Die zwei so verbundenen fluidführenden Bauteile können dabei gleich sein oder unterschiedlich sein. In der Regel handelt es sich um Rohre oder Schläuche. Es kann aber auch sein, dass es sich beispielsweise um Fluidtanks handelt.

Dabei ist für die Funktion des Verbindungselements eine ausreichende Abdichtung der Verbindung wichtig. Eine dafür vorgesehene Dichtung wird dazu durch zumindest zwei verschraubte Verbindungsteile mit einem Anpressdruck beaufschlagt oder zusammengepresst. Dabei muss der Anpressdruck ausreichend groß sein, um eine ausreichende Dichtheit zu ermöglichen. Gleichzeitig darf der Anpressdruck nicht zu groß gewählt werden, da es sonst zu einer negativen Wirkung auf die Bauteile, insbesondere auf die Dichtung kommen kann, beispielsweise ein Bruch, eine Deformation oder eine beschleunigte Alterung. Während des händischen oder maschinellen Verschraubens ist der Anpressdruck meist nur schlecht einstellbar.

In der EP 1 382 793 A1 wird vorgeschlagen, an zwei Verbindungsteilen jeweils eine Markierung anzuordnen, welche durch Verschraubung in Übereinstimmung gebracht werden müssen, um eine ausreichende Dichtheit zu garantieren. Diese Lösung weist jedoch keine Aufnahme für eine Dichtung auf, was dessen Dichtheit begrenzt.

In der EP 0 139 565 A1 ist eine Dichtung vorgesehen, was die Dichtheit erhöht. Auf einem Verbindungsteil ist eine einzelne Markierung angeordnet, die in Übereinstimmung mit einer Ausnehmung gebracht wird, womit angezeigt wird, dass der ausreichende Verdrehungsgrad erreicht wurde. Dies ermöglicht aber keine Feineinstellung des Anpressdrucks. Darüber hinaus kann es zu einer unvollständigen oder überschießenden Verdrehung und einem dadurch falschen Anpressdruck kommen, wenn die eingebaute Dichtung auch nur geringe Fertigungstoleranzen aufweist oder eine Dichtung eines anderen Materials oder Form wie Dicke verwendet wird. Dies führt zu einer nicht genau einstellbaren Anpressdruck, was die Dichtheit herabsetzt und das Risiko einer Beschädigung der Dichtung mit sich bringt.

Aufgabe der Erfindung ist somit, ein Verbindungselement und ein oben genanntes Verfahren bereitzustellen, das eine verbesserte Dichtheit und eine möglichst lange Dichtheit der Verbindung ermöglicht.

Diese Aufgabe wird erfindungsgemäß dadurch gelöst, dass ein erstes Verbindungsteil zumindest eine erste Skala mit einer Vielzahl an Messmarkierungen und ein zweites Verbindungsteil zumindest eine zweite Skala mit zumindest zwei Referenzmarkierungen aufweist, und dass die erste Skala und die zweite Skala im verschraubten Zustand einander gegenüberstehen und durch Verdrehung der Verschraubung gegeneinander verdrehbar sind.

Sie wird auch dadurch gelöst, dass das Verfahren die folgenden weiteren Schritte aufweist.
a. zumindest ein erstes Verbindungsteil und zumindest ein zweites Verbindungsteil so weit ineinander in eine erste Schraubposition geschraubt werden, bis zumindest ein Verbindungsteil an einer Dichtung zumindest eines anderen Verbindungsteils anliegt, dass;
b. die Position zumindest einer ersten Referenzmarkierung zumindest einer zweiten Skala, die an einem zweiten Verbindungsteil angeordnet ist, in Bezug zu einer Vielzahl von Messmarkierungen zumindest einer ersten Skala, die an einem ersten Verbindungsteil angeordnet ist, in der ersten Schraubposition erkannt wird und;
c. die Verbindungsteile dann weiter gegeneinander verschraubt werden, bis zumindest eine andere Referenzmarkierung der zweiten Skala die zumindest im Wesentlichen gleiche Position in Bezug zur ersten Skala einnimmt wie die erste Referenzmarkierung während der ersten Schraubstellung.

Sie wird auch durch einen Markierungsbausatz mit den Merkmalen des entsprechenden unabhängigen Anspruchs gelöst.

Durch die Anordnung der ersten und zweiten Skala kann der Anpressdruck der Dichtung individuell eingestellt werden. Dadurch, dass die erste Skala eine Vielzahl, also zumindest drei, vorzugsweise zumindest fünf, besonders vorzugsweise zumindest zehn und ganz besonders vorzugsweise zumindest 30 Messmarkierungen aufweist, kann die Position einer ersten Referenzmarkierung, beispielsweise eine Start-Referenzmarkierung, gegenüber der Position der Messmarkierungen, vorzugsweise zumindest einer nähesten Messmarkierung, festgestellt werden, wenn die Verbindungsteile in eine erste Schraubposition ineinander geschraubt sind und beide Verbindungsteile an der Dichtung anliegen, sie aber noch nicht oder nur unwesentlich andrücken. Durch das weitere Verschrauben, bis eine zweite Referenzmarkierung, beispielsweise eine End-Referenzmarkierung, an im Wesentlichen der gleichen Position gegenüber der ersten Skala ist, in der die erste Referenzmarkierung in der ersten Schraubstellung war, wird ein definierter Anpressdruck gewährleistet.

Ein Vorteil der Erfindung kann insbesondere darin gesehen werden, dass so Fertigungstoleranzen einer Dichtung keinen Einfluss mehr auf den Anpressdruck haben. Denn wenn beispielsweise die Dicke der Dichtung etwas größer oder kleiner ist, so wird die erste Schraubstellung früher oder später erreicht, ohne dass der Verschraubungsgrad, der den Anpressdruck bestimmt, verändert wird.

Ein weiterer Vorteil der Erfindung kann insbesondere darin gesehen werden, dass auch die Alterung der Dichtung oder eine andere Änderung der Dichtung oder von dessen Eigenschaften, beispielsweise bedingt durch Änderung der externen Bedingungen wie einer Temperaturänderung, überwacht und auf diese reagiert werden kann. Durch Aufzeichnung der ersten Schraubstellung kann nachträglich bei Lockerung und erneuter Zusammenschrauben bis zum Anliegen an die Dichtung überprüft werden, ob es zu einer Kompression der Dichtung gekommen ist.

In diesem Sinne kann auch auf eine entsprechende Alterung reagiert werden, indem nach dem erneuten Zusammenschrauben bis zum Anliegen der Dichtung wieder ein weiter Verschrauben durchgeführt wird, bis eine zweite Referenzmarkierung - die gleiche oder eine andere zweite Referenzmarkierung in Bezug auf das erste Verschrauben - an der gleichen Position gegenüber der ersten Skala ist. Eine gealterte Dichtung, die durch ihre Formveränderung eine herabgesetzte Dichtheit aufweist, kann so in eine Position gebracht werden, in der sie wieder ausreichend abdichtet und weiterverwendet werden. Dies erhöht die Lebensdauer der Dichtung, während der sie dicht verschließen kann.

Wenn zumindest ein Verbindungsteil an einer Dichtung zumindest eines anderen Verbindungsteils anliegt, kann die Dichtung eine Gegenkraft gegen die weitere Verdrehung ausüben oder die weitere Verdrehung bremsen. Diese Gegenkraft oder Bremsung ist während des Zusammenschraubens vom Benutzer leicht bemerkbar, der dadurch erkennt, dass die erste Schraubposition erreicht ist.

Mit "einander gegenüberstehen" ist dabei gemeint, dass die relative Position der ersten und zweiten Skala zueinander feststellbar ist, vorzugsweise einfach feststellbar ist. Sie weisen also eine Nähe zueinander auf, damit ihre Verdrehung zueinander festgestellt werden kann, wenn das erste Verbindungsteil und das zweite Verbindungsteil miteinander verschraubt sind.

Die erste Skala ist an dem ersten Verbindungsteil angeordnet und die zweite Skale ist an dem zweiten Verbindungsteil angeordnet.

Es kann vorgesehen sein, dass die erste Skala über eine stoffschlüssige Verbindung mit dem ersten Verbindungsteil und/oder die zweite Skala über eine stoffschlüssige Verbindung mit dem zweiten Verbindungsteil verbunden ist. Eine solche stoffschlüssige Verbindung kann beispielsweise eine Verklebung, Verschweißung, Verlötung oder Vulkanisierung umfassen. In diesem Sinne kann die erste Skala und/oder die zweite Skala einen Klebestreifen oder Aufkleber umfassen.

Es kann vorgesehen sein, dass die erste Skala über eine kraftschlüssige und/oder formschlüssige Verbindung mit dem ersten Verbindungsteil und/oder die zweite Skala über eine kraftschlüssige und/oder formschlüssige Verbindung mit dem zweiten Verbindungsteil verbunden ist. Eine solche kraftschlüssige Verbindung kann beispielsweise ein Aufpressen oder Verpressen der Skala auf dem Verbindungsteil umfassen. Eine formschlüssige Verbindung kann beispielsweise entsprechende eingreifende Elemente wie Steckverbindungen umfassen.

Es kann auch vorgesehen sein, dass die erste Skala auf das erste Verbindungsteil additiv aufgebracht ist oder wird, und/oder dass die zweite Skala auf das zweite Verbindungsteil additiv aufgebracht ist oder wird. Mit additiv aufgebracht ist dabei gemeint, dass zumindest ein Teil der jeweiligen Skala durch Hinzufügen von Material am jeweiligen Verbindungsteil aufgebracht ist. Beispielsweise kann eine Skala aufgedruckt, laserbeschriftet, oder auflackiert sein.

Es kann auch vorgesehen sein, dass die erste Skala auf das erste Verbindungsteil subtraktiv aufgebracht ist oder wird, und/oder dass die zweite Skala auf das zweite Verbindungsteil subtraktiv aufgebracht ist oder wird. Mit subtraktiv aufgebracht ist dabei gemeint, dass zumindest ein Teil der jeweiligen Skala durch Materialverbrauch am jeweiligen Verbindungsteil aufgebracht ist. Beispielsweise kann eine Skala eingefräst, eingraviert, lasergraviert oder eingeritzt sein.

Mit Dichtung wird im Sinne der Erfindung ein Dichtungselement verstanden, dass im bestimmungsgemäßen Einbau in dem Verbindungselement und Verschraubung der Verbindungsteile die Verbindung der Verbindungsteile abdichtet, sodass das zu transportierende Fluid nicht oder in nur unwesentlichen Mengen austritt. Vorzugsweise umfasst die Dichtung zumindest ein Element, das eine größere Elastizität aufweist als zumindest eines der Verbindungsteile. Vorzugsweise umfasst die Dichtung zumindest einen Dichtungsring, wie beispielsweise einen O-Ring, eine Formdichtung und/oder Flachdichtung.

Die Reihenfolge der Verfahrensschritte müssen nicht zwangsläufig in der in den Ansprüchen aufgelisteten Reihung durchgeführt werden, es kann sein, dass die Verfahrensschritte in einer anderen Reihenfolge durchgeführt werden, zusätzliche Verfahrensschritte dazwischen durchgeführt werden und/oder dass zumindest zwei Verfahrensschritte gleichzeitig durchgeführt werden. Beispielsweise kann die Strömungsverbindung der Verbindungsteile jeweils mit zumindest einem Schlauch, Rohr oder anderen Fluidtransporteinrichtung am Ende des Verfahrens oder an anderer Stelle während des Verfahrens durchgeführt werden.

Vorzugsweise weisen die Verbindungsteile oder zumindest ein Verbindungsteil zumindest ein Gewinde auf. Dies ermöglicht eine Verschraubbarkeit. Dabei umfasst das Gewinde zumindest eines Verbindungsteils vorzugsweise zumindest eine in Bezug auf den Umfang des Verbindungsteils schräge Fläche. Dies ermöglicht eine Distanzänderung entlang der Schraubachsen zwischen den Verbindungsteilen bei einer Verdrehung zueinander.

Es kann vorgesehen sein, dass das erste Verbindungsteil und/oder das zweite Verbindungsteil einen Einlegeteil und einen gegenüber dem Einlegeteil verdrehbaren Schraubteil aufweist, wobei auf dem Schraubteil zumindest ein Gewinde zur Verschraubung mit dem anderen Verbindungsteil aufweist. Weist das erste Verbindungsteil ein Schraubteil auf, so ist das andere Verbindungsteil für dieses Schraubteil das zweite Verbindungsteil. Weist das zweite Verbindungsteil ein Schraubteil auf, so ist das andere Verbindungsteil für dieses Schraubteil das erste Verbindungsteil. Der Einlegeteil und/oder der Schraubteil können Teile des Hauptkörpers sein.

Der Einlegeteil ist üblicherweise in das Schraubteil eingebracht, beispielsweise eingelegt, eingesteckt, eingeschraubt. Es kann auch vorgesehen sein, dass das Einlegeteil auf andere Weise mit dem Schraubteil verbunden ist.

Die erste Skala und/oder zweite Skala kann auf dem Schraubteil des jeweiligen Verbindungsteils angeordnet sein. Ein Verbindungsbereich zur Koppelung mit der Fluidtransporteinrichtung des jeweiligen Verbindungsteils kann vorzugsweise auf dem Einlegeteil dieses Verbindungsteils angeordnet sein.

Ein solches Schraubteil ermöglicht das einfachere Verschrauben ohne den Einlegeteil mitverdrehen zu müssen.

Vorzugsweise ist vorgesehen, dass die relative, axiale Bewegung des Schraubteils gegenüber dem Einlegeteil zumindest in Richtung der Schraubverbindung formschlüssig begrenzt ist. Dies kann beispielsweise durch eine Schulter erreicht werden, die die Bewegung begrenzt.

Mit in Richtung der Schraubverbindung ist in Richtung des anderen Verbindungsteils gemeint.

Vorzugsweise ist vorgesehen, dass die relative, axiale Bewegung des Schraubteils gegenüber dem Einlegeteil zumindest entgegen der Richtung der Schraubverbindung begrenzt ist, vorzugsweise formschlüssig. Dies kann beispielsweise durch eine Schulter erreicht werden, die die Bewegung begrenzt. Eine Schulter wie in den letzten Absätzen beschrieben kann beispielsweise durch zumindest einen Einsatz im Einlegeteil und/oder im Schraubteil vorgesehen sein, beispielsweise einen Einsatzring, vorzugsweise aus Kunststoff oder Gummi.

Vorzugsweise ist vorgesehen, dass eine relative, axiale Bewegung des Schraubteils gegenüber dem Einlegeteil entgegen der Richtung der Schraubverbindung bis zu einer ersten Endstellung begrenzt ist, und dass das Schraubteil in der ersten Endstellung in axialer Richtung und auf der Seite der Schraubverbindung das Einlegeteil überragt. So wird sichergestellt, dass auf der Seite der Schraubverbindung das Einlegeteil stets hinter dem Schraubteil beginnt, wodurch es durch das Schraubteil geschützt ist.

Vorzugsweise ist vorgesehen, dass eine relative, axiale Bewegung des Schraubteils gegenüber dem Einlegeteil entgegen der Richtung der Schraubverbindung bis zu einer ersten Endstellung begrenzt ist, dass das Schraubteil in der Endstellung in axialer Richtung und auf der Seite der Schraubverbindung eine Anliegefläche des Einlegeteils zum Anliegen der Dichtung überragt. Die Anliegefläche kann eine Presswand oder Anliegewand umfassen und/oder kann Teil einer Nut sein. So kann erreicht werden, dass die Anliegefläche vor Beschädigungen durch das Schraubteil geschützt ist.

Vorzugsweise ist vorgesehen, dass das Schraubteil über eine formschlüssige Führung in axialer Richtung entlang des Einlegeteils geführt ist. Dies kann beispielsweise durch korrespondierende Durchmesser von konzentrisch angeordneten Verbindungswänden der Schraubteils und des Einlegeteils erreicht werden.

Vorzugsweise ist vorgesehen, dass eine Gewindeabschnitt des Verbindungsteils, das ein Innengewinde aufweist, im verschraubten Zustand in axialer Richtung vom anderen Verbindungsteil beabstandet ist. Dies verhindert, dass die Verschraubung durch ein Anstehen des Gewindeteils begrenzt wird. Der Gewindeabschnitt ist dabei jenes Teil oder Abschnitt des Verbindungteils, auf dem das Gewinde unmittelbar angeordnet ist. Beispielsweise kann der Gewindeabschnitt eine Gewindemuffe sein.

Vorzugsweise ist vorgesehen, dass die Verbindungsteile zur Strömungsverbindung mit jeweils zumindest einem Schlauch, Rohr oder anderen Fluidtransporteinrichtungen eingerichtet sind oder mit ihnen strömungsverbunden sind.

Mit "zur Strömungsverbindung mit jeweils zumindest einem Schlauch, Rohr oder anderen Fluidtransporteinrichtungen eingerichtet" ist dabei gemeint, dass die Verbindungsteile entweder mit einem Schlauch, Rohr oder anderen Fluidtransporteinrichtungen verbunden werden können oder bereits mit ihnen verbunden sind, beispielsweise trennbar, untrennbar, einstückig und/oder mehrstückig. Vorzugsweise weist zumindest ein Verbindungsteil zumindest einen Verbindungsbereich zur Verbindung mit zumindest einem Schlauch, Rohr oder anderen Fluidtransporteinrichtungen auf.

Es kann vorgesehen sein, dass zumindest ein Verbindungsteil zumindest einen Verbindungsbereich aufweist, der zur Strömungsverbindung mit zumindest einem Schlauch, Rohr oder anderen Fluidtransporteinrichtungen eingerichtet ist. Es kann vorgesehen sein, dass dieser Verbindungsteil gegenüber zumindest einem weiteren Teil des Verbindungsteils, vorzugsweise zumindest gegenüber einem Hauptkörper des Verbindungsteils verdreh- oder verschwenkbar ist.

Es kann vorgesehen sein, dass zumindest ein Verbindungsteil zumindest einen Greifabschnitt aufweist. Dieser Greifabschnitt kann zur Verbindung mit einem Werkzeug oder zum Handbetätigen eingerichtet sein. So kann das Verschrauben erleichtert werden. Zumindest ein Greifabschnitt kann dabei zumindest eine konturierte oder strukturierte Oberfläche und/oder zumindest eine Sechskantform aufweisen.

Die Aufnahme für die Dichtung weist vorzugsweise zumindest eine Anliegefläche auf, auf der die Dichtung im verschraubten Zustand anliegt und durch zumindest ein anderes Verbindungsteil vorzugsweise angedrückt wird. Die Aufnahme kann auch eine Einkerbung oder Ausnehmung umfassen, in der die Dichtung einsetzbar ist. Es kann auch sein, dass die Dichtung auf die Aufnahme aufgesteckt, eingelegt oder aufgebracht wird.

Eine Referenzmarkierung und/oder Messmarkierung kann unterschiedlich ausgeführt sein. In einem einfachen Fall kann es Striche umfassen oder sich um solche handeln. Sie können auch Vertiefungen, Erhebungen, Farbmarkierungen oder sonstige - vorzugsweise optisch und/oder haptisch - wahrnehmbare Markierungen sein.

Die Außenumfangsfläche ist dabei vorzugsweise eine Fläche, die sich entlang des Umfangs um die Schraubachse des jeweiligen Verbindungsteils erstreckt. Sie kann aus mehreren Teilflächen bestehen, beispielsweise bei einem Sechskant ähnlich einer Mutter oder kann auch nur eine einheitliche Fläche aufweisen, beispielsweise bei einer zylindrischen Ausführungsform der Außenumfangsfläche.

Vorzugsweise ist vorgesehen, dass in oder an zumindest einem Verbindungsteil zumindest eine Dichtung in der Aufnahme angeordnet ist. Dabei muss die Dichtung nicht zwangsläufig von allen freien Seiten von dem Verbindungsteil oder Verbindungsteilen verschlossen sein. Es kann auch sein, dass ein Teil der Dichtung nach außen hin frei bleibt. Vorzugsweise ist jedoch vorgesehen, dass die Dichtung im zusammengeschraubten Zustand der zumindest zwei Verbindungsteile von den Verbindungsteilen geschützt ist und/oder nach außen umfasst ist.

Erfindungsgemäß kann auch ein Dichtungsbausatz aus zumindest einem erfindungsgemäßen Verbindungselement und zumindest zwei unterschiedlichen Dichtungen vorgesehen sein. So kann der Benutzer abhängig von der Verwendung oder den Bedingungen die richtige Dichtung auswählen und mit dem Verbindungselement verwenden.

Besonders vorteilhaft ist, wenn die Aufnahme für die Dichtung derart angeordnet ist, dass der Anpressdruck der Dichtung durch den Verschraubungsgrad von zumindest zwei Verbindungsteilen veränderbar ist, vorzugsweise zumindest teilweise kontinuierlich und/oder in vorzugsweise zumindest drei verschiedenen Werten. So wird erreicht, dass durch die Verschraubung der Anpressdruck eingestellt werden kann. Das gilt auch wenn vorgesehen ist, dass während des weiteren Verschraubens der Anpressdruck der Dichtung zwischen den Verbindungsteilen durch das Verschrauben erhöht wird.

Vorzugsweise kann dazu vorgesehen sein, dass das erste Verbindungsteil und das zweite Verbindungsteil jeweils zumindest eine Wand aufweisen, zwischen denen die Dichtung zusammenpressbar ist. Die Wände stehen vorzugsweise in einem Winkel, besonders vorzugsweise normal in Bezug zu den Schraubachsen.

Weiters ist vorteilhaft, wenn sich zumindest die erste Skala und/oder die zweite Skala entlang einer Außenumfangsfläche des jeweiligen Verbindungsteils erstreckt. Mit erstrecken ist dabei gemeint, dass die jeweilige Skala in Umfangsrichtung in Bezug auf die Schraubachse angeordnet ist. Das Gleiche gilt, wenn vorgesehen ist, dass sich zumindest die erste Skala und/oder die zweite Skala entlang einer Außenumfangsfläche des jeweiligen Verbindungsteils erstreckt.

Um eine bessere Ablesbarkeit zu ermöglichen, kann vorgesehen sein, dass die erste Skala und die zweite Skala an Außenumfangsflächen des jeweiligen Verbindungsteils angeordnet sind, die im verschraubten Zustand nebeneinander angeordnet sind. Dies ermöglicht eine einfache Bestimmung der Position einer Referenzmarkierung gegenüber den Messmarkierungen der ersten Skala. Mit nebeneinander ist dabei gemeint, dass die Skalen in räumlicher Nähe zueinanderstehen und dass sie sich entlang im Wesentlichen paralleler Richtungen erstrecken, sodass ihre relative Position zueinander bestimmbar ist. Das Gleiche gilt, wenn vorgesehen ist, dass die erste Skala und die zweite Skala an Außenumfangsflächen des jeweiligen Verbindungsteils derart angeordnet werden, dass sie im verschraubten Zustand nebeneinander angeordnet sind.

In der Regel wird während der Erkennung der Position einer Referenzmarkierung in Bezug zu den Messmarkierungen der ersten Skala ein oder zwei Messmarkierungen bestimmt, die auf gleicher Höhe entlang der Umfänge liegen oder zwischen denen die Referenzmarkierung liegt.

Vorzugsweise ist vorgesehen, dass sich zumindest die erste Skala und/oder die zweite Skala entlang eines Außenumfangs des jeweiligen Verbindungselements um zumindest ein Viertel, vorzugsweise zumindest die Hälfte und besonders vorzugsweise zumindest drei Viertel des Außenumfangs erstreckt. So wird erreicht, dass auch bei Dichtungen besonders unterschiedlicher Form oder Materials eine gute Bestimmung der relativen Position einer Referenzmarkierung gegenüber Messmarkierungen erreicht werden kann. Das Gleiche gilt, wenn vorgesehen ist, dass sich zumindest die erste Skala und/oder die zweite Skala entlang eines Außenumfangs des jeweiligen Verbindungselements um zumindest ein Viertel, vorzugsweise zumindest die Hälfte und besonders vorzugsweise zumindest drei Viertel des Außenumfangs erstreckt. Es kann vorteilhaft sein, wenn zumindest eine Skala, vorzugsweise zumindest eine erste und/oder zumindest eine zweite Skala, segmentiert ist. Mit segmentiert ist dabei gemeint, dass die segmentierte Skala entlang des Außenumfangs an zumindest einer Stelle unterbrochen ist. Alternativ oder zusätzlich kann auch mehr als eine erste Skala und/oder mehr als eine zweite Skala auf dem jeweiligen Verbindungsteil vorgesehen sein.

Eine einfachere Ablesung kann erreicht werden, wenn vorgesehen ist, dass sich die Messmarkierungen untereinander zumindest teilweise unterscheiden, vorzugsweise durch Form, Länge und/oder zumindest eines Symbols wie einer Schrift oder Nummer. Dies beschleunigt die Einstellung. Es erleichtert des Weiteren auch die exakte Aufzeichnung der Relativposition. Denn wie oben bereits erläutert, können sich Eigenschaften oder Form der Dichtung ändern. Aufzeichnungen der Relativpositionen zu einem bestimmten Zeitpunkt, beispielsweise dem ersten Zusammenbau, können hilfreich dabei sein, zu bestimmen, in welchem Zustand die Dichtung ist und eine Voraussicht auf die zu erwartende weitere Lebensdauer gemacht werden. Beispielsweise können die Mess- und/oder Referenzmarkierungen mehrere aufeinanderfolgende Nummern umfassen, mit oder ohne Mess- und/oder Referenzmarkierungen dazwischen, ähnlich einem Maßband. Insbesondere vorteilhaft ist, wenn die Referenzmarkierungen zumindest teilweise mit Symbolen wie Buchstaben, Nummern oder Schriftzügen versehen sind. Dies ermöglicht eine leichte Bezugnahme auf eine bestimmte Ausführungsform oder ein bestimmtes Material von Dichtungen.

Vorzugsweise ist vorgesehen, dass zumindest die erste Skala gegenüber dem Gewinde des ersten Verbindungsteils und/oder einem Hauptkörper des ersten Verbindungsteils, zumindest im verschraubten Zustand mit dem zweiten Verbindungsteil, unverdrehbar um die Schraubachse des ersten Verbindungsteils ist. So wird verhindert, dass es während der Einstellung der Druckbeaufschlagung der Dichtung zu einem ungewollten Verdrehen der Skala gegenüber dem Hauptkörper kommt. Der Hauptkörper umfasst dabei vorzugsweise das Gewinde. Das Gleiche gilt auch, wenn vorgesehen ist, dass zumindest die erste Skala gegenüber dem Gewinde des ersten Verbindungsteils und/oder einem Hauptkörper des ersten Verbindungsteils, zumindest im verschraubten Zustand mit dem zweiten Verbindungsteil, unverdrehbar um die Schraubachse des ersten Verbindungsteils angeordnet wird. Analog gilt dies auch, wenn vorgesehen ist, dass zumindest die zweite Skala gegenüber dem Gewinde des zweiten Verbindungsteils und/oder einem Hauptkörper des zweiten Verbindungsteils, zumindest im verschraubten Zustand mit dem ersten Verbindungsteil, unverdrehbar um die Schraubachse des zweiten Verbindungsteils ist, und/oder wenn vorgesehen ist, dass zumindest die zweite Skala gegenüber dem Gewinde des zweiten Verbindungsteils und/oder einem Hauptkörper des zweiten Verbindungsteils, zumindest im verschraubten Zustand mit dem ersten Verbindungsteil, unverdrehbar um die Schraubachse des zweiten Verbindungsteils angeordnet wird.

Das Verbindungselement kann als Stopfbuchse ausgeführt sein oder dieses umfassen.

Es kann auch vorgesehen sein, dass zumindest die erste Skala gegenüber einem Hauptkörper des ersten Verbindungsteils, und/oder die zweite Skala gegenüber einem Hauptkörper des zweiten Verbindungsteils unverdrehbar um die Schraubachse des ersten Verbindungsteils oder zweiten Verbindungsteils ist. Beispielsweise kann eine solche Ausführungsform sinnvoll sein, wenn das Verbindungselement als Stopfbuchse ausgeführt ist.

Besonders vorteilhaft ist, wenn die zweite Skala zumindest eine Start-Referenzmarkierung und zumindest eine End-Referenzmarkierung aufweist, wobei die Distanz zwischen Start-Referenzmarkierung und End-Referenzmarkierung entlang der zweiten Skala in Abhängigkeit des Materials und/oder Form zumindest einer Dichtung ausgeführt ist. Dies ermöglicht, dass der Benutzer sofort erkennen kann, welche weitere Verdrehung der Verbindungsteile notwendig ist, um eine bestimmte Dichtung in eine dichte Stellung zu bringen. Dies gilt, auch wenn vorgesehen ist, dass die Entfernung der ersten Referenzmarkierung und zumindest einer anderen Referenzmarkierung entlang der zweiten Skala in Abhängigkeit des Materials und/oder der Form der Dichtung gewählt wird.

Es kann zusätzlich oder stattdessen vorgesehen sein, dass die zweite Skala zumindest eine Start-Referenzmarkierung und zumindest eine End-Referenzmarkierung aufweist, wobei die Distanz zwischen Start-Referenzmarkierung und End-Referenzmarkierung entlang der zweiten Skala in Abhängigkeit von anderen Parametern gewählt oder eingerichtet ist oder wird. Beispielsweise kann die Gewindesteigung miteinbezogen werden.

In diesem Sinne ist besonders vorteilhaft, wenn die zweite Skala zumindest eine Start-Referenzmarkierung und zumindest zwei End-Referenzmarkierungen aufweist, wobei die Distanz zwischen einer Start-Referenzmarkierung und zumindest zwei End-Referenzmarkierung entlang der zweiten Skala in Abhängigkeit des Materials und/oder Form zumindest zweier unterschiedlicher Dichtungen ausgeführt ist. So kann mit wenigen Referenzmarkierungen eine Vielzahl an verschiedenen Dichtungsarten oder -materialien abgedeckt werden. Dies gilt auch, wenn vorgesehen ist, dass die Entfernung der ersten Referenzmarkierung und zumindest zweier anderen Referenzmarkierung entlang der zweiten Skala in Abhängigkeit des Materials und/oder der Form zumindest zweier unterschiedlicher Dichtungen gewählt wird.

Es kann vorgesehen sein, dass die Dichtung im verschraubten Zustand in einer Nut der Aufnahme angeordnet ist und vorzugsweise, dass die Nut zumindest einen Entlüftungsbereich aufweist. Dieser Belüftungsbereich kann zur Abführung von Luft in der Nut ausgebildet sein und/oder zumindest einen Entlüftungskanal umfassen.

Der Belüftungsbereich ist vorzugsweise von der Dichtung nicht vollständig abgedeckt. Mit Abdecken ist gemeint, dass zumindest ein Teil des Entlüftungsbereichs frei von der Dichtung ist, vorzugsweise zumindest während des Einbringens der Dichtung. Es kann vorgesehen sein, dass der Entlüftungsbereich derart ausgeführt ist, dass ihn die Dichtung in zumindest einem verschraubten Zustand vollkommen abdeckt. Dies kann beispielsweise der Fall sein, wenn die Dichtung in diesem verschraubten Zustand zusammengedrückt wird und dadurch in den Entlüftungsbereich oder auf den Entlüftungsbereich gedrückt wird. Dies ist aber unschädlich für die Wirkung des Entlüftungsbereichs, da die Luft entweichen kann, bis die Dichtung vollständig in die Nut eingebracht wurde und das Zusammendrücken beginnt.

Die Dicke der Nut und die Dicke der Dichtung sind vorzugsweise aufeinander abgestimmt. In diesem Sinne kann die Dichtung und die Nut derart ausgeführt sein, dass die Dichtung die Nut in radialer Richtung im Wesentlichen vollständig ausfüllt.

Der Entlüftungsbereich ist vorzugsweise mit einer Hinterseite der Nut strömungsverbunden. So kann Luft vom Inneren der Nut nach außen geführt werden, wenn die Dichtung in die Nut eingebracht wird. Es kann vorgesehen sein, dass der Entlüftungsbereich mit einer Stirnseite der Nut strömungsverbunden ist. Es kann auch vorgesehen sein, dass der Entlüftungsbereich eine radiale Ausnehmung oder Nase der Nut umfasst. Diese kann radial innen und/oder radial außen angeordnet sein.

Mit Ausnehmung ist dabei gemeint, dass die Nut im Bereich der Ausnehmung einen breiteren Querschnitt aufweist. Wird die Dichtung in die Nut eingesetzt, so verbleibt ein Luftbereich in der Ausnehmung und die Luft hinter der Dichtung kann über diese Ausnehmung austreten.

Mit Nase ist dabei gemeint, dass die Nut im Bereich der Nase im Bereich der Nase einen geringeren Querschnitt aufweist. Wird die Nut eingesetzt, so wird sie durch die Nase lokal eingedrückt, wodurch an den Seiten der Nase Strömungskanäle entstehen, durch die die Luft hinter der Dichtung austreten kann.

Die Nut ist im ersten Verbindungsteil oder im zweiten Verbindungsteil angeordnet. Es kann auch vorgesehen sein, dass beide Verbindungsteile jeweils eine Nut aufweisen.

Die Erfindung betrifft auch einen Markierungsbausatz umfassend zumindest zwei Markierungsstreifen, wobei die Markierungsstreifen jeweils auf zumindest einer ersten Seite Verbindungseinrichtungen zum Anbringen der Markierungsstreifen auf zwei unterschiedliche Verbindungsteile eines Verbindungselements für Schläuche, Rohre oder andere Fluidtransporteinrichtungen aufweisen, wobei ein erster Markierungsstreifen auf zumindest einer zweiten Seite zumindest eine erste Skala mit einer Vielzahl an Messmarkierungen aufweist und wobei ein zweiter Markierungsstreifen auf zumindest einer zweiten Seite zumindest eine zweite Skala mit zumindest zwei Referenzmarkierungen aufweist.

Durch einen derartigen Markierungsbausatz können Markierungsstreifen einfach auf bestehende Verbindungselemente aufgebracht werden und damit die Erfindung auch bei bereits hergestellten oder gar schon verbauten Verbindungselementen angewendet werden.

Es kann vorgesehen sein, dass der Markierungsbausatz zumindest ein, vorzugsweise eine Vielzahl an Verbindungselementen für Schläuche, Rohre oder andere Fluidtransporteinrichtungen, mit jeweils zumindest zwei Verbindungsteilen aufweist, wobei die Verbindungsteile miteinander um Schraubachsen der Verbindungsteile verschraubbar sind, wobei zumindest ein Verbindungsteil zumindest eine Aufnahme für eine Dichtung zur Abdichtung der Verbindung zwischen zumindest zwei der Verbindungsteile aufweist. So kann der Benutzer je nach Notwendigkeit die passenden Markierungsstreifen auf die passenden Verbindungselemente befestigen.

Zumindest eine Verbindungseinrichtung kann beispielsweise eine Verbindungsfläche zur Verbindung mit einem Verbindungsteil aufweisen. Auf dieser kann beispielsweise Klebstoff angeordnet sein.

Vorzugsweise ist vorgesehen, dass die Verbindungseinrichtung zumindest eines Markierungsstreifen einen Klebstoff umfasst und dass vorzugsweise zumindest ein Markierungsstreifen als Aufkleber ausgeführt ist.

Vorzugsweise liegen die erste Seite und die zweite Seite einander gegenüber.

In weiterer Folge wird die Erfindung anhand einer nicht einschränkenden Ausführungsform in den Figuren erläutert. Es zeigen:
- Fig. 1: eine Seitenansicht einer erfindungsgemäßen ersten Ausführungsform eines Verbindungselements;
- Fig. 2: ein Detail aus Fig. 1;
- Fig. 3: einen Längsschnitt durch die erste Ausführungsform;
- Fig. 4: einen Längsschnitt durch eine erfindungsgemäße zweite Ausführungsform;
- Fig. 5: eine Frontalsicht des zweiten Verbindungsteils der zweiten Ausführungsform;
- Fig. 6: einen vergrößerten Ausschnitt aus Fig. 5;
- Fig. 7: ein Teil des Schraubteils vergrößert.

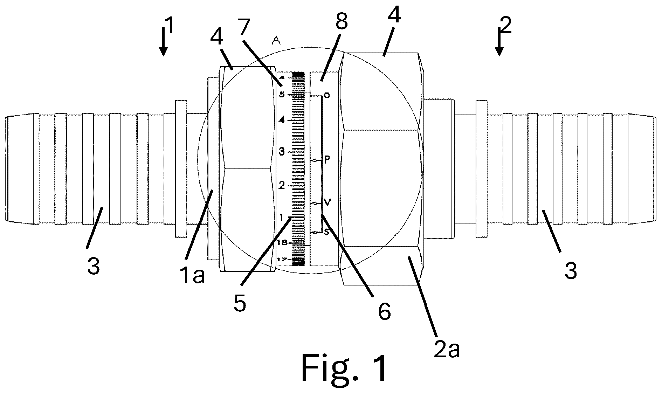

Die in den Figuren 1 - 3 gezeigte erste Ausführungsform der Erfindung eines Verbindungselements weist zwei Verbindungsteile 1, 2 auf, welche in Fig. 1 in einem ineinander verschraubten Zustand dargestellt sind. Sie weisen jeweils einen Hauptkörper 1a, 2a auf, wobei in dieser Ausführungsform das erste Verbindungsteil 1 einstückig ausgeführt ist. Das zweite Verbindungsteil 2 ist zweistückig ausgeführt.

Beide Verbindungsteile 1, 2 weisen an ihren im zusammengeschraubten Zustand voneinander abgewandten Ende jeweils einen Verbindungsbereich 3 auf, welcher zur Verbindung mit einem Schlauch, Rohr oder anderen Fluidtransporteinrichtungen eingerichtet ist. Dazu weisen die Verbindungsbereiche 3 vorzugsweise wie dargestellt Rippen zur Verbesserung des Halts auf.

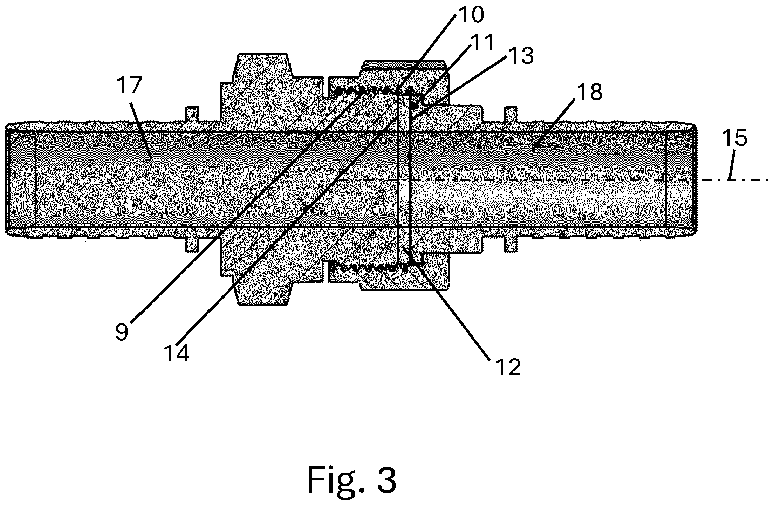

In Fig. 3 ist sichtbar, dass jedes Verbindungsteil 1, 2 jeweils einen Kanal 17, 18 aufweist, welche in der dargestellten verschraubten Stellung strömungsverbunden sind. Somit wird die Strömungsverbindung zwischen den an den Verbindungsbereichen 3 angeordneten Schläuchen, Rohren oder anderen Fluidtransporteinrichtungen hergestellt.

Der Hauptkörper 2a des zweiten Verbindungsteils 2 ist nicht einstückig mit dem Verbindungsbereich 3 des zweiten Verbindungsteils 2 verbunden. Er ist in diesen aufgesteckt und gegenüber dem Verbindungsbereich 3 drehbar.

Weiters weisen die Verbindungsteile 1, 2 jeweils einen Greifabschnitt 4 auf. Diese können dazu verwendet werden, mit gängigen Schraubenschlüssel oder anderen geeigneten Werkzeugen verbunden zu werden und so eine gegenseitige Verschraubung der Verbindungsteile 1, 2 einzustellen. Dieser Greifabschnitt 4 kann beispielsweise eine Randrierung und/oder eine Nutmutter umfassen.

An den zugewandten Enden der Außenmäntel der Verbindungsteile 1, 2 ist an zumindest einem Verbindungsteil 1, 2 eine erste oder zweite Skala 5,6 angeordnet. Dies wurde dadurch erreicht, indem ein erfindungsgemäßer Markierungsbausatz mit zwei als Aufkleber ausgeführte Markierungsstreifen 28, 29 verwendet wurden und ein erster Markierungsstreifen 28 aufweisend die erste Skala 5 auf dem ersten Verbindungsteil 1 aufgeklebt wurde und ein zweiter Markierungsstreifen 29 aufweisend die zweite Skala 6 auf dem zweiten Verbindungsteil 1 aufgeklebt wurde. Die zweiten Seiten der jeweiligen Markierungsstreifen 28, 29 weisen von dem jeweiligen Verbindungsteil weg.

In der gezeigten Ausführungsform ist an dem ersten Verbindungsteil 1 eine erste Skala 5 und an dem Hauptkörper 3 des zweiten Verbindungsteils 2 eine zweite Skala 6 angeordnet.

Die Außenmäntel weisen an den zugewandten Enden Außenumfangsflächen 7, 8 auf, welche im Wesentlichen als zylindrische Mantelflächen geformt sind. Dies ermöglicht eine gute Ablesbarkeit der Skalen 5, 6 und ein gleichbleibendes Gegenüberstehen der Skalen 5, 6 während der Verschraubung zueinander.

Die erste Skala 5 weist eine Vielzahl an Messmarkierungen mit über 180 Messmarkierungen auf. Dabei weist jede Messmarkierung einen Strich auf, wobei jeder zehnte Strich verlängert und zusätzlich mit einer aufsteigenden Zahl versehen ist. Dies verbessert das Ablesen.

Die zweite Skala 6 weist insgesamt 4 Referenzmarkierungen auf, es können aber auch weniger sein. Die erste Referenzmarkierung ist eine mit einer Null gekennzeichnete Start-Referenzmarkierung, die einen Strich umfasst. Die übrigen Referenzmarkierungen weisen jeweils einen Pfeil auf und sind darüber hinaus mit einem Buchstaben gekennzeichnet. In dieser Ausführungsform sind es "P", "V" und "S", es können aber auch abweichende Beschriftungen vorliegen. Sie weisen entlang der Außenumfangsfläche 8 unterschiedliche Entfernungen zur Start-Referenzmarkierung auf und sind unterschiedliche End-Referenzmarkierungen.

Im Schnitt in Fig. 3 ist sichtbar, dass ein erstes Gewinde 9 des Hauptkörpers 1a des ersten Verbindungsteils 1 sowie ein zweites Gewinde 10 des Hauptkörpers 2a des zweiten Verbindungsteils 2 vorgesehen ist, die miteinander korrespondieren. In den Figuren sind die Gewinde 9,10 miteinander verschraubt dargestellt. Das zweite Verbindungsteil 2 weist eine Aufnahme 11 ohne Nut auf, in der eine Dichtung 12 in Form eines Dichtrings eingesetzt ist. Die Aufnahme 11 ist an dem Verbindungsbereich 3 angeordnet. Die Aufnahme 11 weist eine Anliegewand 13 auf, welche in einem Winkel, in dieser Ausführungsform normal zur Schraubachse 15 des zweiten Verbindungsteils 2 steht.

Das erste Verbindungsteil 1 weist eine Presswand 14 auf, welche die Dichtung 12 an die Anliegewand 13 anpressen kann und so eine Abdichtung zwischen dem ersten und zweiten Verbindungsteil 1,2 erreicht.

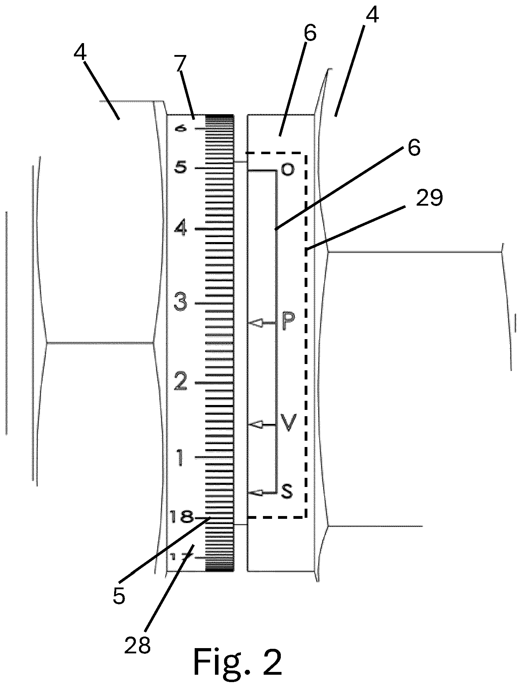

In Fig. 1 und Fig. 2 sind die Verbindungsteile 1, 2 in einer ersten Schraubposition gezeigt, in der die Verbindungsteile 1, 2 so weit ineinander verschraubt sind, dass die Presswand 14 an der Dichtung 12 anliegt und diese wiederum an der Anliegewand 13 anliegt, wodurch das weitere Verschrauben durch die Dichtung 12 gebremst wird. Wie in Figs. 1 und 2 ersichtlich, befindet sich die Start-Referenzmarkierung in etwa auf Höhe der Messmarkierung "5". Der Benutzer kann durch den erhöhten Widerstand erkennen, dass er die erste Schraubposition erreicht hat und diese Übereinstimmung ablesen. Abhängig von Bauart und Material der Dichtung 12 schraubt er dann die Verbindungsteile 1,2 soweit weiter ineinander, bis die jeweilige End-Referenzmarkierung an der gleichen Höhe der ersten Skala 5, also auf Höhe der "5" steht. "P" steht dafür für eine PTFE (Polytetrafluorethylen) Dichtung 12, "E" für eine solche aus EPDM (Ethylen-Propylen-Dien-Kautschuk), "S" für eine solche aus Silikon und "V" für eine solche aus Fluorelastomeren ("Viton^{®}"). Je nach Material der eingesetzten Dichtung 12 wird die jeweilige End-Referenzmarkierung benutzt.

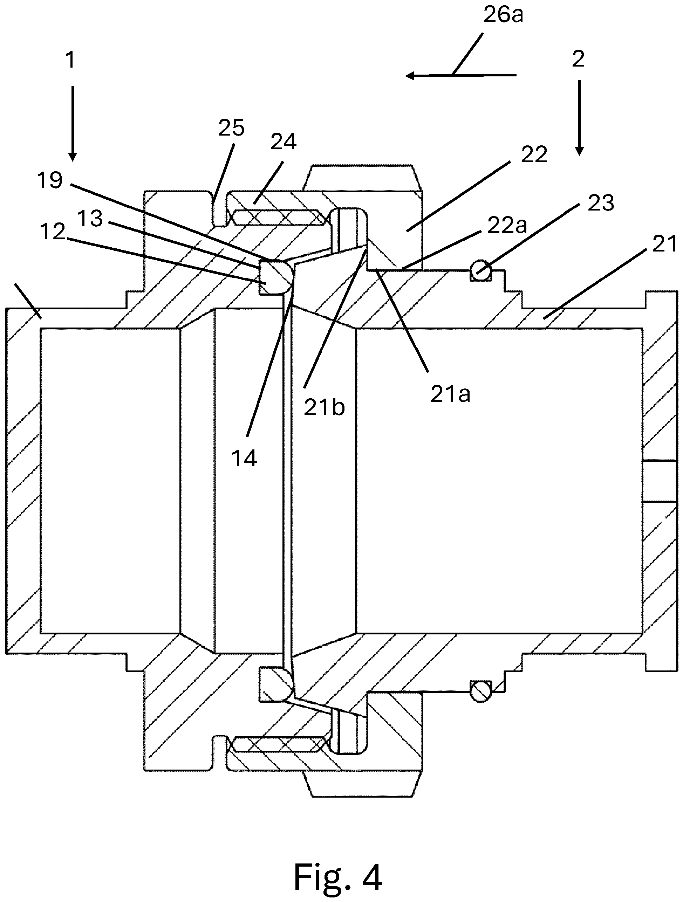

In den Figuren 4 - 6 wird eine zweite Ausführungsform gezeigt, die wie die erste Ausführungsform an der Außenseite eine erste und zweite erfindungsgemäße Skala aufweist (in den Figuren nicht sichtbar).

In Fig. 4 ist sichtbar, dass das ein Verbindungsteil, in diesem Fall das zweite Verbindungsteil 2, einen Einlegeteil 21 und einen Schraubteil 22 aufweist, wobei das Gewinde 10 und die zweite Skala auf dem Schraubteil 22 angeordnet sind. Der Verbindungsbereich 3 ist mit dem Einlegeteil 21 unverdrehbar verbunden und der Schraubteil 22 ist mit dem Hauptkörper 2a unverdrehbar verbunden. In einer alternativen Ausführungsform kann vorgesehen sein, dass nur eine dieser Verbindungen unverdrehbar ist.

Die Presswand 14 ist auf dem Einlegeteil 21 angeordnet.

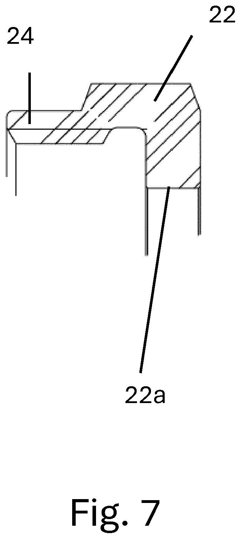

Das Schraubteil 22 weist eine innere Mantelwand 22a auf, deren innerer Durchmesser mit dem äußeren Durchmesser einer Mantelwand 21a des Einlegeteils 21 korrespondiert. So wird der Schraubteil 22 in axialer Richtung entlang des Einlegeteils 21 geführt. Ein Teil des Schraubteils 22 ist in Fig. 7 alleine dargestellt.

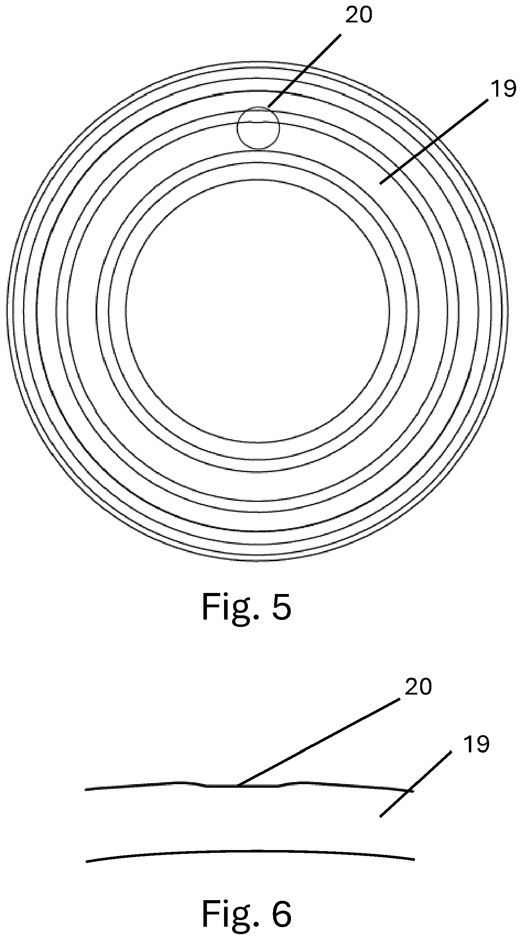

Entlang dieser Führung ist die Bewegung des Schraubteils 22 in Richtung der Schraubverbindung durch eine Schulter 21b formschlüssig begrenzt. Dies ermöglicht ein Anpressen des Einlegeteils 21 an das erste Verbindungsteil 1 im verschraubten Zustand, wie in Fig. 5 dargestellt.

Entlang dieser Führung ist die Bewegung des Schraubteils 22 entgegen der Richtung 26a der Schraubverbindung durch eine Schulter formschlüssig begrenzt. Diese Schulter wird durch einen in eine Nut des Einlegeteils 21 eingesetzten Ring 23 dargestellt.

Wenn sich das Schraubteil 22 im unverschraubten Zustand von der Schraubverbindung entgegen der Richtung 26a wegbewegt, bis es an dem Ring 23 ansteht, ist es in einer ersten Endstellung angeordnet. In dieser ersten Endstellung überragt der Schraubteil 22 das Einlegeteil 21 auf der Seite der Schraubverbindung axial. Somit überragt es auch die Presswand 14 und schützt sie dadurch vor Beschädigungen während die Verbindungsteile 1, 2 nicht verschraubt sind. Das Schraubteil 22 überragt das Einlegeteil 21 radial außerhalb des Einlegeteils 21.

Das erste Verbindungsteil 1 weist eine Aufnahme mit einer radialen Nut 19 auf, in der die Dichtung 12 eingesetzt ist. Dabei füllt die Dichtung 12 die Nut 19 in radialer Richtung vollständig aus. Der Nutboden weist die Anliegewand 13 auf, auf der sich die Dichtung 12 abstützt.

Im Fig. 4 gezeigten verschraubten Zustand ist ein Schraubabschnitt 24, der als Schraubenhülse ausgeführt ist, in axialer Richtung vom anderen Verbindungsteil, in diesem Fall dem ersten Verbindungsteil 1, beabstandet. Eine Schulter 25 des ersten Verbindungsteils 1 ist beabstandet angeordnet. So wird verhindert, dass die Verschraubung gehemmt wird.

In Fig. 5 ist eine Vorderansicht des zweiten Verbindungsteil 2 ohne die Überwurfmutter gezeigt. Dabei ist sichtbar, dass die Nut 19 im Wesentlichen ringförmig ist, in die die ringförmige Dichtung 12 eingesetzt werden kann. An drei Stellen weist die Nut 19 auf der radial äußeren Seite Entlüftungsbereiche 20 auf. Die Umgebung eines Entlüftungsbereichs 20 ist in Fig. 6 vergrößert dargestellt. Diese Entlüftungsbereiche 20 sind als Nasen ausgeführt, die vom Nutboden, der durch eine Anliegefläche in Form der Anliegewand 14 dargestellt wird, bis zur Stirnseite der Nut 19 reichen. Die Dichtung wird durch die Nase lokal zusammengepresst, wodurch an beiden Seiten jeder Nase Entlüftungskanäle gebildet werden. Wir die Dichtung 12 in die Nut 19 eingeschoben, so füllt sie die Nut in radialer Richtung im Wesentlichen vollständig aus (in Fig. 4 sichtbar), bis auf die Entlüftungskanäle der Entlüftungsbereiche 20. Somit bilden die Entlüftungsbereiche 20 Strömungskanäle zwischen dem Bereich der Nut 19 nahe des Nutbodens (gebildet durch die Anliegewand 13) und der Stirnseite der Nut 19. Dadurch kann die Luft zwischen dem Nutboden und der Dichtung 12 über die Entlüftungsbereiche 20 entweichen.

## Patentansprüche

1. Verbindungselement für Schläuche, Rohre oder andere Fluidtransporteinrichtungen, mit zumindest zwei Verbindungsteilen (1,2), wobei die Verbindungsteile miteinander um Schraubachsen (15) der Verbindungsteile (1, 2) verschraubbar sind, wobei zumindest ein Verbindungsteil (1, 2) zumindest eine Aufnahme (11) für eine Dichtung (12) zur Abdichtung der Verbindung zwischen zumindest zwei der Verbindungsteile (1,2) aufweist, **dadurch gekennzeichnet, dass** ein erstes Verbindungsteil (1) zumindest eine erste Skala (5) mit einer Vielzahl an Messmarkierungen und ein zweites Verbindungsteil (2) zumindest eine zweite Skala (6) mit zumindest zwei Referenzmarkierungen aufweist, und dass die erste Skala (5) und die zweite Skala (6) im verschraubten Zustand einander gegenüberstehen und durch Verdrehung der Verschraubung gegeneinander verdrehbar sind.

2. Verbindungselement nach Anspruch 1, **dadurch gekennzeichnet, dass** die erste Skala (5) und die zweite Skala (6) an Außenumfangsflächen (7, 8) des jeweiligen Verbindungsteils angeordnet sind, die im verschraubten Zustand nebeneinander angeordnet sind.

3. Verbindungselement nach Anspruch 1 oder 2, **dadurch gekennzeichnet, dass** sich zumindest die erste Skala (5) und/oder die zweite Skala (6) entlang eines Außenumfangs des jeweiligen Verbindungselements (1, 2) um zumindest ein Viertel, vorzugsweise zumindest die Hälfte und besonders vorzugsweise zumindest drei Viertel des Außenumfangs erstreckt und/oder dass zumindest eine Skala, vorzugsweise zumindest eine erste Skala, segmentiert ist.

4. Verbindungselement nach einem der Ansprüche 1 bis 3, **dadurch gekennzeichnet, dass** die zweite Skala (6) zumindest eine Start-Referenzmarkierung und zumindest eine End-Referenzmarkierung aufweist, wobei die Distanz zwischen Start-Referenzmarkierung und End-Referenzmarkierung entlang der zweiten Skala (6) in Abhängigkeit des Materials und/oder Form zumindest einer Dichtung (12) ausgeführt ist.

5. Verbindungselement nach einem der Ansprüche 1 bis 4, **dadurch gekennzeichnet, dass** die zweite Skala (6) zumindest eine Start-Referenzmarkierung und zumindest zwei End-Referenzmarkierungen aufweist, wobei die Distanz zwischen einer Start-Referenzmarkierung und zumindest zwei End-Referenzmarkierung entlang der zweiten Skala (6) in Abhängigkeit des Materials und/oder Form zumindest zweier unterschiedlicher Dichtungen (12) ausgeführt ist.

6. Verbindungselement nach einem der Ansprüche 1 bis 5, **dadurch gekennzeichnet, dass** die Dichtung (12) im verschraubten Zustand in einer Nut (19) der Aufnahme (11) angeordnet ist und dass die Nut (19) zumindest einen Entlüftungsbereich (20) aufweist.

7. Verbindungselement nach einem der Ansprüche 1 bis 6, **dadurch gekennzeichnet, dass** das erste Verbindungsteil (1) und/oder das zweite Verbindungsteil (2) einen Hauptkörper (21) und einen gegenüber dem Hauptkörper (21) verdrehbaren Schraubteil (22) aufweist, wobei auf dem Schraubteil (22) zumindest ein Gewinde zur Verschraubung mit dem anderen Verbindungsteil (1,2) aufweist.

8. Verbindungselement nach Anspruch 7, **dadurch gekennzeichnet, dass** eine relative, axiale Bewegung des Schraubteils (22) gegenüber dem Einlegeteil (21) entgegen der Richtung (26a) der Schraubverbindung bis zu einer ersten Endstellung begrenzt ist, und dass das Schraubteil (22) in der Endstellung in axialer Richtung und auf der Seite der Schraubverbindung das Einlegeteil (21) überragt.

9. Verbindungselement nach Anspruch 7 oder 8, **dadurch gekennzeichnet, dass** das Schraubteil (22) über eine formschlüssige Führung in axialer Richtung entlang des Einlegeteils (21) geführt ist.

10. Verbindungselement nach einem der Ansprüche 1 bis 15, **dadurch gekennzeichnet, dass** ein Gewindeabschnitt (24) des Verbindungselements (1, 2), das ein Innengewinde aufweist, im verschraubten Zustand in axialer Richtung vom anderen Verbindungsteil (1, 2) beabstandet ist.

11. Dichtungsbausatz umfassend zumindest einem Verbindungselement gemäß einem der vorherigen Ansprüche, **dadurch gekennzeichnet, dass** der Dichtungsbausatz zumindest zwei Dichtungen (12) unterschiedlichen Materials oder Aufbaus umfasst.

12. Verfahren zur Verbindung von Schläuchen, Rohren oder anderen Fluidtransporteinrichtungen mittels eines Verbindungselements aufweisend zumindest zwei Verbindungsteile, wobei die Verbindungsteile (1,2) jeweils mit zumindest einem Schlauch, Rohr oder anderen Fluidtransporteinrichtung strömungsverbunden werden, wobei in oder an zumindest eine Aufnahme (11) zumindest eines Verbindungsteils (1, 2) zumindest eine Dichtung (12) angeordnet wird und die Verbindungsteile (1, 2) ineinander geschraubt werden, **dadurch gekennzeichnet, dass**
a. zumindest ein erstes Verbindungsteil (1) und zumindest ein zweites Verbindungsteil (2) soweit ineinander in eine erste Schraubposition geschraubt werden, bis zumindest ein Verbindungsteil (1, 2) an einer Dichtung (12) zumindest eines anderen Verbindungsteils (1, 2) anliegt, dass;
b. die Position zumindest einer ersten Referenzmarkierung zumindest einer zweiten Skala (6), die an einem zweiten Verbindungsteil (2) angeordnet ist, in Bezug zu einer Vielzahl von Messmarkierungen zumindest einer ersten Skala (5), die an einem ersten Verbindungsteil (1) angeordnet ist, in der ersten Schraubposition erkannt wird und;
c. die Verbindungsteile (1, 2) dann weiter gegeneinander verschraubt werden, bis zumindest eine andere Referenzmarkierung der zweiten Skala (6) die zumindest im Wesentlichen gleiche Position in Bezug zur ersten Skala (5) einnimmt wie die erste Referenzmarkierung während der ersten Schraubstellung.

13. Verfahren nach Anspruch 12, **dadurch gekennzeichnet, dass** die Entfernung der ersten Referenzmarkierung und zumindest einer anderen Referenzmarkierung entlang der zweiten Skala (6) in Abhängigkeit des Materials und/oder der Form der Dichtung (12) gewählt wird.

14. Verfahren nach einem der Ansprüche 12 oder 13, **dadurch gekennzeichnet, dass** die erste Skala (5) und die zweite Skala (6) an Außenumfangsflächen (7, 8) des jeweiligen Verbindungsteils derart angeordnet werden, dass sie im verschraubten Zustand nebeneinander angeordnet sind.

15. Markierungsbausatz umfassend zumindest zwei Markierungsstreifen (28, 29), wobei die Markierungsstreifen (28, 29) jeweils auf zumindest einer ersten Seite Verbindungseinrichtungen zum Anbringen der Markierungsstreifen auf zwei unterschiedliche Verbindungsteile (1, 2) eines Verbindungselements für Schläuche, Rohre oder andere Fluidtransporteinrichtungen aufweisen, wobei ein erster Markierungsstreifen (28, 29) auf zumindest einer zweiten Seite zumindest eine erste Skala (5) mit einer Vielzahl an Messmarkierungen aufweist und wobei ein zweiter Markierungsstreifen (28, 29) auf zumindest einer zweiten Seite zumindest eine zweite Skala (6) mit zumindest zwei Referenzmarkierungen aufweist.
